(19) Europäisches Patentamt
European Patent Office
Office européen des brevets

(11) **EP 1 847 586 B1**

(12) **EUROPEAN PATENT SPECIFICATION**

(45) Date of publication and mention
of the grant of the patent:
**03.04.2013 Bulletin 2013/14**

(21) Application number: **06712263.0**

(22) Date of filing: **24.01.2006**

(51) Int Cl.:
*C10M 171/00* *(2006.01)*    *C10M 129/26* *(2006.01)*
*C10M 129/40* *(2006.01)*    *C10M 133/08* *(2006.01)*
*C10M 133/10* *(2006.01)*    *C10M 133/16* *(2006.01)*
*C10M 149/14* *(2006.01)*    *C10M 169/00* *(2006.01)*
*F16C 19/18* *(2006.01)*    *F16C 33/66* *(2006.01)*
*B60B 35/02* *(2006.01)*    *C10M 101/02* *(2006.01)*
*C10M 115/08* *(2006.01)*    *C10M 117/02* *(2006.01)*
*C10M 133/38* *(2006.01)*    *C10M 135/18* *(2006.01)*
*C10M 159/24* *(2006.01)*    *C10N 30/00* *(2006.01)*
*C10N 30/12* *(2006.01)*    *C10N 40/02* *(2006.01)*
*C10N 50/10* *(2006.01)*

(86) International application number:
**PCT/JP2006/301047**

(87) International publication number:
**WO 2006/078035 (27.07.2006 Gazette 2006/30)**

(54) **GREASE COMPOSITION FOR HUB UNIT BEARING, AND HUB UNIT BEARING FOR VEHICLES**

SCHMIERFETTZUSAMMENSETZUNG FÜR NABENEINHEITSLAGER UND NABENEINHEITSLAGER FÜR FAHRZEUGE

COMPOSITION DE GRAISSE POUR UN ROULEMENT DE MOYEU ET ROULEMENT DE MOYEU POUR DES VEHICULES

(84) Designated Contracting States:
**DE FR GB**

(30) Priority: **24.01.2005   JP 2005015469
12.07.2005   JP 2005203328
12.07.2005   JP 2005203329
25.07.2005   JP 2005214053**

(43) Date of publication of application:
**24.10.2007   Bulletin 2007/43**

(73) Proprietors:
• **NSK LTD.
Shinagawa-ku,
Tokyo 141-8560 (JP)**
• **Kyodo Yushi Co., Ltd.
Tokyo 104-0061 (JP)**

(72) Inventors:
• **NAKATANI, Shinya
c/o Nsk Ltd.
Fujisawa-shi, Kanagawa 251-8501 (JP)**
• **KURAISHI, Jun
c/o Nsk Ltd.
Fujisawa-shi, Kanagawa 251-8501 (JP)**

• **MATSUMOTO, Tomoaki
c/o Nsk Ltd.
Fujisawa-shi, Kanagawa 251-8501 (JP)**
• **NAMIKI, Minoru
c/o Kyodo Yushi Co.,Ltd.
Fujisawa-shi, Kanagawa (JP)**
• **AIDA, Ryo
c/o Kyodo Yushi Co.,Ltd.
Fujisawa-shi, Kanagawa (JP)**
• **ENDO, Toshiaki
c/o Kyodo Yushi Co.,Ltd.
Fujisawa-shi, Kanagawa (JP)**

(74) Representative: **Grünecker, Kinkeldey,
Stockmair & Schwanhäusser
Leopoldstrasse 4
80802 München (DE)**

(56) References cited:
**EP-A- 1 496 103       EP-A2- 1 496 103
WO-A-03/099973       GB-A- 1 083 075
JP-A- 5 247 485       JP-A- 03 210 394
JP-A- 07 316 579       JP-A- 08 041 478
JP-A- 10 017 884       JP-A- 2001 247 888
JP-A- 2002 323 053       JP-A- 2004 331 716**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

JP-A- 2004 359 848    US-A- 2 445 936              US-A1- 2002 076 125
US-A- 2 828 261       US-A- 3 801 506

JP-A- 2004 359 848    US-A- 2 445 936              US-A1- 2002 076 125
US-A- 2 828 261       US-A- 3 801 506

**Description**

TECHNICAL FIELD

The present invention relates to a grease composition having excellent flaking resistance and capable of maintaining good lubrication for a long period of time, and to a vehicular hub unit bearing.

BACKGROUND ART

A so-called hub unit bearing of a closed type provided with a seal has heretofore been much used as a bearing for vehicles such as motorcars, railroad cars, etc. The vehicular hub unit bearing is used, generally while exposed to outdoor water and dust. In addition, it may be used while buried in muddy water. The vehicular hub unit bearing that is used in such an atmosphere is sealed up with a sealing unit and is therefore protected from penetration of external water and dust thereinto; however, it is difficult to completely protect it from water penetration thereinto. Accordingly, the grease composition filled in the vehicular hub unit bearing may be in contact with water; but it is generally known that when water is mixed in the grease composition, then it greatly shorten the durability life of rolling bearings. For example, Furumura et al. report that, when 6 % water is mixed in a lubricant oil (#180 turbine oil), then a rolling fatigue life lowers to from one-severalth to 1/20 of that in a case with no water mixing (see Non-Patent Reference 1). Schatzberg et al. report that, when only 100 ppm water is mixed in lubricant oil, then its steel rolling strength lowers by from 32 to 48 % (see Non-Patent Reference 2).

The shortening of life may be considered because the hydrogen generated through decomposition of the mixed water may penetrate into the steel of a bearing material to cause hydrogen embrittlement, thereby resulting in metal flaking accompanied by a change into a white structure owing to the hydrogen embrittlement (hereinafter this may be referred to as white structure flaking). For preventing such white structure flaking, grease compositions with various additives added thereto have been proposed.

For example, proposed are a grease composition with a passivate oxidizing agent such as sodium nitrite added thereto (see Patent Reference 1) ; a grease composition with an organic antimony compound or an organic molybdenum compound added thereto (see Patent References 2 and 3) ; and a grease composition with an inorganic compound having a particle size of at most 2 $\mu$m added thereto (see Patent Reference 4). These grease compositions form the additive-derived coating film around the rolling contact part (raceway surface, rolling surface) of a rolling bearing to thereby prevent hydrogen from penetrating into the bearing material.

As a grease capable of preventing a vehicular hub unit bearing from flaking even when it contains water, there is known a waterproof grease prepared by adding a surfactant having HLB of from 3 to 14 to a grease containing a diurea compound serving as a thickener (for example, Patent Reference 5). In addition, also known is a waterproof grease containing a base oil, a thickener and an N-vinylamide resin (for example Patent Reference 6).

On the other hand, known is a grease composition for wheel-supporting bearings, to which is added ZnDTP for improving the abrasion resistance of the bearings (see Patent Reference 7) .

In addition, when water is mixed in a grease, then the shearing stability of the grease may lower and the grease may flow out though a lubricated site. As a grease of which the shearing stability is improved even when it contains water, proposed are a grease with a metal phenate added thereto (see Patent Reference 8) ; and a grease with a calcium or magnesium salt of a fatty acid added thereto (see Patent Reference 9).

Apart from grease compositions, also proposed are a method of using stainless steel as a bearing material (see Patent Reference 10), and a method of using a ceramic rolling element (see Patent Reference 11).

Further specific grease and lubricant compositions are known in prior art to overcome occuring problems in bearings, specifically roller bearings.

Patent Reference 12 proposes a rust-proof water-repellant lubricating grease and, specifically a lithium and sodium soap lubricating grease carrying a rust-proofing agent. The grease is for instance used in a bearing. The grease composition comprises an oil-soluble rust-proofing agent, which while having the property of inhibiting the rusting of a rustable base to which the grease is applied, decreases the water-proofing characteristic of the grease. To compensate said effect, the grease further comprises a metal soap.

Patent Reference 13 aims to provide additives for bearing structures to impart improved water-resistance to alkali-thickened, particularly lithium soap and lithium-calcium soap-thickened greases without adversely affecting the desirable characteristic of the grease. Hence, alkoxylated additives such as polymeric alkoxylated derivatives of alcohols, alkoxylated adducts of alkylated phenols or mixed alkoxylated products of alkylene diamines are added to the grease composition.

Patent Reference 14 discloses an aerogel-thickened lubricant of good temperature susceptibility and water resistance characteristics. The thickened lubricant known from said patent comprises water-insoluble oil-miscible or -dispersible polyalkylene glycol ethers, an alkylol- or amino imidazoline and nonabrasive inorganic thickening or filling agent and finely divided silica such as a silica aerogel. Particularly, the presence of the al kylol or amino imidazoline and the polyalkylene glycol ether contribute to the technical effect of excellent temperature susceptibility properties and excellent dynamic water resistance.

Patent Reference 15 proposes a rolling bearing, which is to be used under high-temperature, high-speed, and heavy-load conditions and is suitable for use in an area susceptible to intrusion of water having a grease composition sealed therein. According to said patent, the grease composition comprises a base oil, a thickener, a conductive substance, and other additives. The conductive substance used comprises particularly carbon nanotubes having a diameter of 0.5 to 15 nm and an overall length of 0.5 to 50 $\mu$m. Alternatively, carbon black having a mean particle size of 10 to 300 nm is used as the conductive substance. Due to the provision of such a conductive substance, a static electricity is energized at all time, whereby a potential difference developing between inner and outer rings of a rolling bearing, in which the grease composition may be used, is substantially obviated, thereby preventing occurrence of electrolysis of water. As a further result, generation of an progress in exfoliation involving occurrence of white-etching-constituent structural changes can be suppressed.

Patent Reference 16 proposes a grease composition with excellent flaking life and excellent seizure life at high temperatures, which can be suitably used under high-temperature, high-speed and high-load conditions such as a rolling bearing enclosing said grease composition. Said grease composition. comprises a lubricating base oil, at least one diurea compound represented by specific formulas including a combination of a C7-12 aromatic ring-containing hydrocarbon group, a C6-15 divalent hydrocarbon group, and a cyclohexyl group or a C7-12 alkylcyclohexyl group with specific proportions of said diurea compounds, respectively. Further, said grease composition has a naphthenic acid salt and succinic acid or a derivative thereof, wherein each of the proportions of the naphthenic acid salt and the succinic acid or its derivative is 0.1 to 10 % by mass based on the total amount of the grease composition.

Patent Reference 17 proposes a lubricant composition used as lubricating oil or grease to be used for a bearing. The lubricant comprises molybdate being a metal salt of a molybdic acid for forming a film containing a molybdenumncompound to prevent the rolling surface of the rolling bearing from flaking in an early stage. For further improving this effect, an organic acid salt is used in combination with the molybdate.

Patent Reference 18 discloses a rust-preventive grease, which is improved in extreme-pressure and lubricating properties and provides a prolonged life. The antirust grease comprises oleate of dicyclohexylamine in an amount of 3 to 10 weight %.

Patent Reference 19 aims to provide a grease composition adapted to be used over wide temperature ranges, wherein the disclosed grease composition provides improved extreme pressure and anti-wear properties. The grease composition comprises an olefin polymer having a viscosity index of at least 110 and being prepared from an olefin having from 5 to 18 carbon atoms per molecule, a thickening agent, calcium acetate and an amount of an N-acyl-substituted sarcosine compound with an aliphatic hydrocarbon radical having from 8 to 24 carbon atoms, which amount is set to be sufficient to maintain the calcium acetate in its dispersed state. Particularly, the N-acyl-substituted sarcosine compound is present in an amount from 0.05 to 2.0 weight % for an amount of calcium acetate ranging from 1 to 20 weight %.

Patent Reference 1: JP-B-2878749
Patent Reference 3: JP-B-3512183
Patent Reference 4: JP-A-9-169989
Patent Reference 5: JP-A-9-87652
Patent Reference 6: JP-A-2005-105026
Patent Reference 7: JP-A-2001-254089
Patent Reference 8: JP-B-2-8639
Patent Reference 9: JP-B-3-26717
Patent Reference 10: JP-B-3-173747
Patent Reference 11: JP-B-4-244624
Patent Reference 12: US 2,445,936 A
Patent Reference 13: US 3,801,506 A
Patent Reference 14: US 2,828,261 A
Patent Reference 15: US 2002/0076125 A1
Patent Reference 16: WO 03/099973 A
Patent Reference 17: EP 1 496 103 A2
Patent Reference 18: JP-05-247485
Patent Reference 19: GB 1,083,075
Non-Patent Reference 1: Kyozaburo Furumura, Shinichi Shirota, Kiyoshi Hirakawa; Regarding rolling fatigue at surface starting point and inner starting point, NSK Bearing Journal, No. 636, pp. 1-10, 1977
Non-Patent Reference 2: P. Schatzberg, I. M. Felsen: Effects of water and oxygen during rolling contact lubrication, Wear, 12, pp. 331-342, 1968

DISCLOSURE OF THE INVENTION

PROBLEMS THAT THE INVENTION IS TO SOLVE

However, the grease compositions described in the above-mentioned Patent References 1 to 4, which contain various additive added thereto, may have a trouble of flaking in rolling contact parts when water is mixed in them or rolling elements are slid owing to their vibration or speed change before the additives in them may act to form sufficient coating films.

The flaking preventing effect of the waterproof greases described in Patent References 5 and 6 could not be satisfactory for the recent requirement for prolongation of the life of bearings. In motorcars and others, the driving vibration in long-distance tracking or transport by rail may be transmitted to bearings, and therefore there may occur fretting wear caused by repeated shock between rolling elements and inner and outer raceways; however, conventional mineral oil-lithium soap type grease could not be satisfactory for the recent requirement for high durability, in point of the durability thereof to such fretting wear (fretting resistance). Lubricant grease applicable to high-temperature/high-load driving is desired, for which the demand may increase in future.

The grease composition described in Patent Reference 7 may have improved abrasion resistance, as containing an extreme-pressure agent such as ZnDTP added thereto; but when water is mixed therein, it could not be satisfactory for preventing shortening of the life before flaking.

The greases that have improved shearing stability when containing water, as in Patent References 8 and 9, are water-repellent greases, in which, therefore, water kept in contact with the grease may form large water droplets and may be taken in the grease to exist heterogeneously therein. As a result, they have a problem in that the oily film formed on the slide face of the lubricated site may be partially removed, and their lubrication capability may lower starting from that part. The rolling bearings described in Patent References 10 and 11, in which stainless steel or ceramics are used as the bearing material, have a problem in that they are expensive.

In addition, iron such as bearing steel may be readily corroded (rusted) when water exists around it, and therefore has a problem in that the rolling bearings may make noises though raceway surfaces or rolling element surfaces may not be flaked. Regarding vehicular hub unit bearing that may be wetted with water, it is extremely important that they are resistant to corrosion, and therefore, some measures are taken for them according to the same methods as above; but at present, the corrosion-preventing effect could not also be satisfactory for the recent requirement for bearings of high reliability.

A grease composition dealing with the problem of white structure flaking is for instance known from patent reference 15. According to said prior art, a conductive substance such as carbon black or carbon nanotube is used as part of the grease composition, wherein said conductive substance allows an energization of a developed static electricity at all time to obviate a potential difference between inner and outer rings.

Accordingly, an object of the present invention is to solve the prior-art problems mentioned above, and to provide a grease composition which may keep a good lubrication condition for a long period of time even when water is mixed therein and having excellent white structure flaking resistance, water proofness and corrosion resistance. Another object of the invention is to provide a long-life vehicular hub unit bearing, which hardly undergoes white structure flaking or corrosion even when used in an environment in which water may penetrate into it.

MEANS FOR SOLVING THE PROBLEMS

The aforesaid problem is solved by a grease composition as defined in claim 1 having those features in the preamble, which are known from patent reference 15 and by a vehicular hub unit bearing as specified in claim 2.

EFFECT OF THE INVENTION

The grease composition for hub unit bearings of the invention has excellent flaking resistance, waterproofness and corrosion resistance, and even when used in an environment in which water may penetrate into it or in the presence of water around it, it hardly undergoes white structure flaking. Accordingly, the composition may keep good lubrication for a long period of time.

BRIEF DESCRIPTION OF THE DRAWINGS

Fig. 1 is a vertical cross-sectional view showing the structure of a vehicular hub unit bearing of the invention;
Fig. 2 is a vertical cross-sectional view showing the structureof another vehicular hubunit bearing of the invention;

Fig. 3 is a view showing a bearing for use in a vehicular hub unit bearing of the invention;

DESCRIPTION OF REFERENCE NUMERALS

| | |
|---|---|
| 1 | vehicular hub unit bearing |
| 2 | hub |
| 3 | inner ring |
| 4 | outer ring |
| 5 | rolling element |
| 6 | wheel attachment flange |
| 8 | step |
| 8a | step face |
| 10 | cylinder |
| 11 | nut |
| 12 | sealing unit |
| 13 | closed space |
| 14 | cover |
| 16 | cage |
| 17 | wheel attachment flange |
| 20a, 20b | inner raceway surface |
| 21a, 21b | outer raceway surface |
| 7 | vehicular hub unit bearing |
| 73 | wheel attachment flange |
| 74 | inner ring |
| 75 | hub |
| 76 | rolling element |
| 77 | cage |
| 78 | seal member |
| 91 | inner ring |
| 92 | outer ring |

93          rolling element

94          cage

95          seal member

BEST MODE FOR CARRYING OUT THE INVENTION

Embodiments of the invention are described with reference to the drawings.

<Regarding Vehicular hub unit bearing>

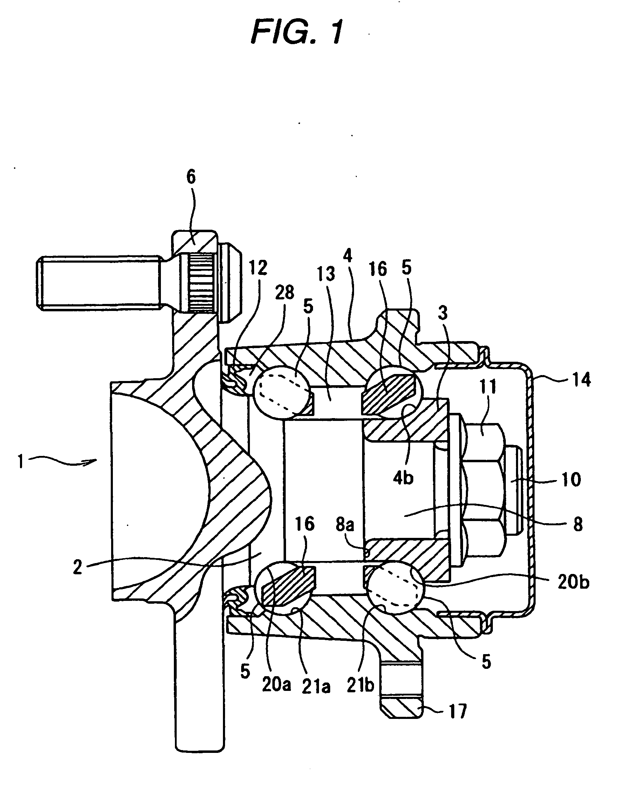

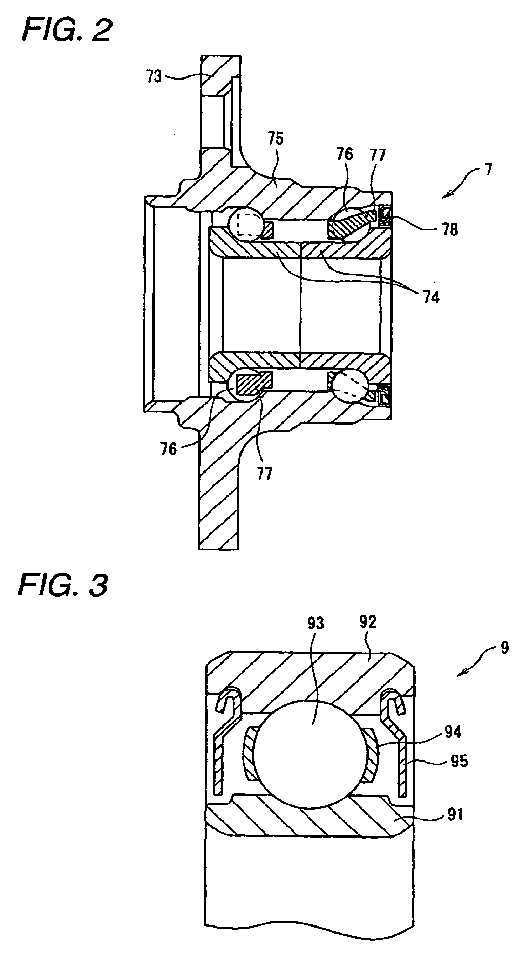

Fig. 1 is a view showing a vehicular hub unit bearing of this embodiment. In the following description, the vehicular hub unit bearing is fitted to a vehicle such as a motorcar, and in that condition, the outer side in the width direction of the vehicle is referred to as an outer end side, and the center side in the width direction thereof is referred to as an inner end side. Accordingly, in Fig. 1, the left side is the outer end side, and the right side is the inner end side.
The vehicular hub unit bearing 1 of Fig. 1 has the hub 2, the inner ring 3, the outer ring 4, and the rolling elements 5, 5 in double rows, and is provided with the wheel attachment flange 6, which is for attaching it to a wheel (not shown), at the outer end side part of the outer peripheral surface of the hub 2. The inner end side of the hub 2 is formed to have a small-diameter part 8 having a smaller outer diameter, and the inner ring 3 is fitted into the small-diameter part 8. In addition, the part on the inner end side than the small-diameter part 8 of the hub 2 is formed to have a protruding cylinder 10, and a male screw is formed on the outer peripheral surface of the cylinder 10. The inner ring 3 is held sandwiched between the nut 11 screwed into the male screw, and the step face 8a formed in the boundary between the small-diameter part 8 and a part having a larger outer diameter on the outer end side than the small-diameter part 8, whereby the inner ring 3 is integrally fixed to the hub 2. The inner ring 3 and the hub 2 constitute the inner peripheral side member of the invention; and the outer ring 4 constitutes the outer peripheral side member of the invention.
On the outer peripheral surface of the inner ring 3 and on the outer peripheral surface of the hub 2 positioning on the outer side than the inner ring 2, formed are the inner raceway surfaces 20a, 20b. On the inner peripheral surface of the outer ring 4, formed are the outer raceway surfaces 21a, 21b corresponding to the inner raceway surfaces 20a, 20b, respectively. Further, plural rolling elements 5, 5 are rollably disposed between the inner raceway surfaces 20a, 20b and the outer raceway surfaces 21a, 21b; and the inner peripheral side member is thereby made rotatable relative to the outer ring 4. In a unit bearing for relatively lightweight vehicles such as passenger cars, a ball is often used for the rolling element 5. But in a unit bearing for heavyweight vehicles, a roller is often used for it. For example, in a unit bearing for large-size motorcars, a tapered roller is often used; and in a unit bearing for railroad cars, a tapered roller or a cylindrical roller is often used.
A sealing unit 12 is disposedbetween the inner peripheral surface of the outer peripheral side part of the outer ring 4 and the outer peripheral surface of the hub 2 facing to it; and this seals up the end opening of the bearing space formed between the inner peripheral side member and the outer ring 4. In the bearing space, disposed are crown-shaped cages 16, 16 formed of a synthetic resin, which hold the rolling elements 5, 5 aligned in double rows in such a manner that the openings of the pockets could face in the opposite directions to each other; and the part sandwiched between the pair of the cages 16, 16 forms the closed space 13 in the bearing space. The closed space 13 is, though not shown, filled with a grease composition (this is described in detail hereinunder) that lubricates the rolling elements 5, 5, the outer raceway surfaces 21a, 21b, and the inner raceway surfaces 20a, 20b. The grease composition filled in the closed space 13 is partly stirred by the rolling elements 5, 5, and the remaining major part thereof is not stirred; and therefore, the grease composition is, as a whole, degraded little, and it may keep its quality for a long period of time. Further, the opening part on the inner peripheral side of the bearing space is sealed up with the cover 14 provided on the inner peripheral side of the outer ring 4, and the cover 14 acts to prevent impurities such as water and dust from penetrating into the bearing space and to prevent the grease composition in the bearing space from leaking out.
On the outer peripheral surface of the outer ring 4, disposed is a suspension attachment flange 17, at the end on the side spaced from the wheel attachment flange 6. For attaching the vehicular hub unit bearing 1 to a motorcar, the outer ring 4 is fixed to a suspension (not shown) via the suspension attachment flange 17, as formed on the outer peripheral surface of the outer ring 4, and the wheel is fixed to the wheel attachment flange 6. As a result, the wheel is supported by the vehicular hub unit bearing 1, rotatably to the suspension.
For its application, the present invention is not limited to the vehicular hub unit bearing 1, in which a part of the inner peripheral side member is integrated with the hub as mentioned hereinabove. For example, the invention is applicable to a vehicular hub unit bearing, in which the outer peripheral side member is integrated with the hub, as in Fig. 2; or to a supporting bearing 9 for vehicles that is fitted to a separate hub as in Fig. 13.
The vehicular hub unit bearing 7 of Fig. 2 has an outer peripheral side member of the invention that constitutes a part of the hub 75, two inner rings 74, 74 that constitutes the inner peripheral side member of the invention, rolling members 76, 76 in double rows, and a cage 77. Also in Fig. 2, the left side is the outer end side and the right side is the inner end side, like in Fig. 1. At the outer peripheral side part of the outer peripheral surface of the hub 75, disposed is a wheel attachment flange 73, which is for attaching a wheel (not shown) to the unit; and on the inner periphery of the inner peripheral side part of the hub 75 that is cylindrical, formed are outer raceway surfaces in double rows. On the outer peripheries of the two inner rings 74, 74, formed are inner raceway surfaces that correspond to the above outer raceway surfaces; and between these outer raceway surfaces and the inner raceway surfaces, rollably disposed are plural rolling elements 76 so that the hub 75 is made rotatable relative to the inner rings 74, 74. The inner rings 74, 74 are fitted to a shaft (not shown), and the shaft is supported by a vehicle body and the wheel attached to the hub 75 is thereby supported by the vehicle body rotatably thereto.

A grease composition of the invention is filled in the bearing space between the hub 75 and the inner rings 74, 74 of the vehicular hub unit bearing 7; and the bearing space is sealed up with the seal member 78 disposed in the inner peripheral side part of the bearing space and a cover (not shown) disposed at the outer peripheral side part of the hub 75. In that manner, since the vehicular hub unit bearing 7 is filled with a grease composition of the invention, it has excellent flaking resistance.

The wheel-supporting bearing 9 of Fig. 3 is a rolling bearing having an inner ring 91 to constitute the inner peripheral side member of the invention, an outer ring 92 to constitute the outer peripheral side member of the invention, rolling elements 93, a cage 94 and a seal member 95. The space between the inner ring 91 and the outer ring 92 is filled with a grease composition of the invention, and therefore the wheel-supporting bearing 9 has excellent flaking resistance.

The grease composition for hub unit bearing of the invention (hereinafter this may be simply referred to as grease composition) is described in detail hereinunder, showing some concrete embodiments thereof.

The grease composition of the invention has a flaking inhibitor, a base oil and a thickener.

[Base oil]

The base oil to be used is at least one of mineral oil-type lubricant oils and synthetic lubricant oils.

The mineral oil-type lubricant oil includes paraffinic mineral oils and naphthenic mineral oils; and especially preferred are those prepared through purification of reduced-pressure distillation, oil deasphalting, solvent extraction, hydro-cracking, solvent dewaxing, sulfuric acid washing, white clay purification and hydro-refining, suitably as combined.

The synthetic oil-type lubricant base oil includes hydrocarbon oils, aromatic oils, ester oils, ether oils.

The hydrocarbon oils include poly-$\alpha$-olefins or their hydrides such as normal paraffin, isoparaffin, polybutene, polyisobutylene, 1-decene oligomer, 1-decene/ethylene co-oligomer.

The aromatic oils include alkylbenzenes such as monoalkylbenzenes, dialkylbenzenes; and alkylnaphthalenes such as monoalkylnaphthalenes, dialkylnaphthalenes, polyalkylnaphthalenes.

The ester oils include diester oils such as dibutyl sebacate, di-2-ethylhexyl sebacate, dioctyl adipate, diisodecyl adipate, ditridecyl adipate, ditridecyl glutarate, methyl acetylcinnolate; aromatic ester oils such as trioctyl trimellitate, tridecyl trimellitate, tetraoctyl pyromellitate; polyol ester oils such as trimethylolpropane caprylate, trimethylolpropane pelargonate, pentaerythritol 2-ethylhexanoate, pentaerythritol pelargonate; complex ester oils that are oligoesters of polyalcohol and mixed fatty acid of dibasic acid/monobasic acid.

The ether oils include polyglycols such as polyethylene glycol, polypropylene glycol, polyethylene glycol monoether, polypropylene glycol monoether; phenyl ether oils such as monoalkyltriphenyl ether, alkyldiphenyl ether, dialkyldiphenyl ether, pentaphenyl ether, tetraphenyl ether, monoalkyltetraphenyl ether, dialkyltetraphenyl ether. Other synthetic lubricant base oils are tricresyl phosphate, silicone oil, perfluoroalkyl ether.

The kinematic viscosity of the base oil at 40°C is preferably from 40 mm$^2$/sec to 250 mm$^2$/sec, for the purpose of evading noise generation in starting at low temperature and evading seizure to be caused by the difficulty in forming oily film at high temperature. More preferably it is from 50 mm$^2$/sec to 150 mm$^2$/sec, even more preferably from 70 mm$^2$/sec to 120 mm$^2$/sec, most preferably from 75 mm$^2$/sec to 110 mm$^2$/sec. In case where the composition is used at high temperatures, for example, in a tropical area, the kinematic viscosity is preferably from 100 mm$^2$/sec to 250 mm$^2$/sec. When less than 40 mm$^2$/sec, then it is unfavorable in view of the waterproofness of the composition; and when more than 250 mm$^2$/sec, then the torque may increase and therefore it is unfavorable from the viewpoint of heat resistance.

[Thickener]

Not specifically defined, the thickener may be any one having the agility to form a gel structure and to keep a base oil in the gel structure. For example, metal soaps such as metal soap with any of Li and Na, or composite metal soap with any of Li, Na, Ba and Ca; or non-soap such as Benton, silica gel, urea compounds, urea/urethane compounds, urethane compounds may be suitably selected and used. However, with the current rapid development of hub units, the inside of hub units may be at higher temperatures, and therefore in consideration of the heat resistance of grease, preferred are urea compounds, urea/urethane compounds, urethane compounds or their mixtures. The urea compounds include diurea compounds, triurea compounds, tetraurea compounds, polyurea compounds, urea/urethane compounds, diurethane compounds and their mixtures. Of those, preferred are diurea compounds, urea/urethane compounds, diurethane compounds or their mixtures. Even more preferably, a diurea compound is added to the composition. Preferably, the amount of the urea compound serving as a thickener is from 5 to 40 wt% of the overall amount of grease. More preferably, it is from 5 to 35 wt%, even more preferably from 5 to 25 wt%, most preferably from 8 to 25 wt%. When the amount of the thickener is less than 5 wt%, then the composition could hardly keep its grease condition; but when the amount of the thickener is more than 40 wt%, then the grease composition may be too hard to fully exhibit its lubricating condition, and it is therefore unfavorable.

[Flaking Inhibitor]

An amine-type rust inhibitor having a salt of oleic acid and dicyclohexylamine is added to the grease composition of the invention, serving as a flaking inhibitor. The amount of the amine-type rust inhibitor to be added may be from 0.5 to 2 wt% of the overall amount of grease. When the amount is less than 0.1 wt%, then the inhibitor may be ineffective; but even though more than 5 wt%, its effect may not increase any more. Taking these into consideration, the amount according to the invention has to be chosen from 0.5 to 2 wt%.

[Other Additives]

Various additives may be optionally added to the grease composition of the invention for further improving its various properties. For example, one or more additives generally used in grease compositions, such as antioxidant, rust inhibitor, extreme pressure agent, oil improver, metal inactivator, may be used either singly or as combined.
The antioxidant includes, for example, amine compounds, phenol compounds, sulfur compounds, zinc dithiophosphate. Examples of the amine-type antioxidant are phenyl-1-naphthylamine, phenyl-2-naphthylamine, diphenylamine, phenylenediamine, oleylamidamine, phenothiazine.
Examples of the phenol-type antioxidant are hindered phenols such as p-t-butylphenyl salicylate, 2,6-di-t-butyl-p-phenylphenol, 2,2'-methylenebis(4-methyl-6-t-octylphenol), 4,4'-butylidenebis-6-t-butyl-m-cresol, tetrakis[methylene-3-(3',5'-di-t-butyl-4'-hydroxyphenyl)pr opionate]methane, 1,3,5-trimethyl-2,4,6-tris(3,5-di-t-butyl-4-hydroxybenzyl) benzene, n-octadecyl β-(4'-hydroxy-3',5'-di-t-butylphenyl)propionate, 2-n-octyl-thio-9,6-di(4'-hydroxy-3',5'-di-t-butyl)phenoxy-1,3,5-triazine, 4,4'-thiobis(6-t-butyl-m-cresol), 2-(2'-hydroxy-3'-t-butyl-5'-methylphenyl)-5-chlorobenzotri azole.
The rust inhibitor includes, for example, esters. Examples of the esters are sorbitan esters such as sorbitan monolaurate, sorbitan tristearate, sorbitan monooleate and sorbitan trioleate that are partial esters of polybasic carboxylic acids with polyalcohols; and alkyl esters such as polyoxyethylene laurate, polyoxyethylene oleate, polyoxyethylene stearate.
The oil improver includes, for example, fatty acids such as oleic acid, stearic acid; alcohols such as lauryl alcohol, oleyl alcohol; amines such as stearylamine, cetylamine; phosphates such as tricresyl phosphate; animal and vegetable oils. In addition, an extreme pressure agent such as phosphorus compounds, zinc dithiophosphate, organic molybdenum compounds; and a metal inactivator such as benzotriazole may also be used.
Not specifically defined, the amount of the additive may be any one not interfering with the obj ect of the invention; and in general, it may be from 0.1 to 20 wt% of the overall amount of the grease composition. If less than 0.1 wt%, then the additive may be poorly effective; and even if more than 20 wt%, the additive effect could not increase any more, but rather since the amount of the base oil may relatively decrease, the lubrication may be poor and it is therefore unfavorable.

[Production Method]

The method for producing the grease composition of the invention is not specifically defined. In general, however, it may be obtained by reacting a thickener in a base oil. Preferably, a predetermined amount of a flaking inhibitor is added to the obtained grease composition. However, after the above additives are added thereto, the mixture must be fully stirred and uniformly dispersed, using a kneader or a roll mill. Heating may be effective in this treatment. In the above production method, it is desirable from the process thereof that additives such as abrasion inhibitor and antioxidant are added to the system simultaneously with the flaking inhibitor thereto.

EXAMPLES

The invention is described more concretely with reference to the following Examples and Comparative Examples, which, however, do not whatsoever restrict the scope of the invention.

The above grease composition was tested, as described below.

(Examples G1 and G2)

A mineral oil mixed with amine was reacted with a mineral oil mixed with diisocyanate, and stirred under heat to prepare an urea-type base grease. After gradually cooled, an amine-type rust inhibitor containing a salt of oleic acid and dicyclohexylamine was added to the base grease in an amount of 1 wt%, then stirred and defoamed to obtain a grease sample. In the same manner but using a mixed oil of a mineral oil and a poly-α-olefin oil as the base oil, another urea-type grease was produced.

(Comparative Examples G1 to G3)

For comparison, a grease sample of the above urea-type base grease alone (Comparative Example G1): a grease sample containing 1 wt% of a rust inhibitor, barium sulfonate (by Nihon Seika) added to the urea-type base grease (Comparative Example G2) ; and a grease sample having 1 wt% of a rust inhibitor, barium sulfonate added to an urea-type base grease containing a mixed oil of a mineral oil and a poly-α-olefin oil as the base oil thereof (Comparative Example G3) were prepared according to the above-mentioned method.
All grease samples were controlled to have a consistency of NLGI No. 2. They contained 1 wt% of an amine-type antioxidant (p,p'-dioctyldiphenylamine, by Tokyo Kasei) added thereto.

(Test for Rust Inhibition)

A grease sample is sealed up in ball bearing "608" of NSK to a level of 20 % of the space volume, and left for one week in a constant temperature/humidity bath (test condition: temperature 80°C, humidity 90 %), and the inner ring is visually checked for rusting. The tested samples are ranked as follows, based on the number of rusty spots.

A: No rust.
B: From 1 to 5 rusty spots.
C: 6 or more rusty spots.

(Bearing Waterproofness Test)

A grease sample is sealed up in a tapered roller bearing by NSK (HR32017 (inner diameter 85 mm, outer diameter 130 mm)), and the bearing is continuously rotated under a radial load of 35.8 kN and an axial load of 15.7 kN and at a revolution speed of 1500 rpm with water being introduced into it from the outside at a rate of 20 ml/hr. The flaking test is continued for an intended period of 100 hours. At the time when the outer ring running surface of the bearing has flaked to give vibration, or after 100 hours with no flaking, the test is stopped. One grease sample is tested 10 times in the manner, and the flaking probability is obtained according to the following formula:

## Flaking Probability (%)

## = (number of flaked samples/ number of tested samples) × 100.

[Table 1]

Table 7-1

| | | Example G1 | Example G2 | Comparative Example G1 | Comparative Example G2 | Comparative Example G3 |
|---|---|---|---|---|---|---|
| Base Oil | mineral oil[1] | 80 | 50 | 81 | 80 | 50 |
| | poly-α-olefin oil[2] | - | 30 | - | - | 30 |
| Thickener: aromatic diurea (mas.%)[3] | | 18 | 18 | 18 | 18 | 18 |
| Antioxidant[4] | | 1 | 1 | 1 | 1 | 1 |

(continued)

| | Example G1 | Example G2 | Comparative Example G1 | Comparative Example G2 | Comparative Example G3 |
|---|---|---|---|---|---|
| Amine-type Rust Inhibitor[5] | 1 | 1 | - | - | - |
| Barium Sulfonate[6] | - | - | - | 1 | 1 |
| Flaking Probability after Bearing Waterproofness Test (%) | 0 | 0 | 50 | 100 | 100 |
| Rusting Rank[7] | A | A | C | A | A |
| Mixture Consistency | 278 | 275 | 283 | 280 | 277 |

Notes) The unit is wt% except for the mixture consistency
1) Mineral oil, having a kinematic viscosity at 40°C of 98.3 $mm^2$/sec
2) Poly-$\alpha$-olefin oil, having a kinematic viscosity at 40°C of 98.7 $m^2$/sec
3) Diurea formed through reaction of 4,4'-diphenylmethane diisocyanate and p-toluidine
4) p,p'-dioctyldiphenylamine, by Tokyo Kasei
5) Amine-type rust inhibitor, containing a salt of oleic acid and dicyclohexylamine
6) Barium sulfonate, by Nihon Seika
7) Rusting Rank:
   A: No rust.
   B: From 1 to 5 rusty spots.
   C: 6 or more rusty spots.

From Table 1, it is understood that the greases containing an amine-type rust inhibitor that contains a salt of oleic acid and dicyclohexylamine exhibit not only excellent flaking resistance but also excellent corrosion resistance. As opposed to these, the grease not containing the above amine-type rust inhibitor and the greases containing barium sulfonate as a rust inhibitor could not exhibit sufficient flaking resistance and corrosion resistance.
Investigating the above-mentioned Examples and Comparative Examples, it is believed that the absence of barium sulfonate is preferred in all the embodiments.

INDUSTRIAL APPLICABILITY

The grease composition for hub unit bearings of the invention has excellent flaking resistance, waterproofness and corrosion resistance, and even when used in an environment in which water may penetrate into it or in a wet condition, the composition hardly causes white structure flaking and corrosion. Accordingly, the composition may keep good lubrication condition for a long period of time.
This application is based upon a Japanese patent application filed on January 24, 2005 (Patent Application 2005-15496), a Japanese patent application filed on July 12, 2005 (Patent Application 2005-203325), a Japanese patent application filed on July 12, 2005 (Patent Application 2005-203329) and a Japanese patent application filed on July 25, 2005 (Patent Application 2005-214053).

**Claims**

1. A grease composition for hub unit bearings (1; 7), comprising:

   a base oil that comprises at least one of mineral oil and synthetic oil as a main ingredient thereof;
   a thickener; and
   a flaking inhibitor, which inhibits white structure flaking,
   **characterized in that**
   the flaking inhibitor is an amine-type rust inhibitor comprising a salt of oleic acid and dicyclohexylamine, and has a content of from 0.5 to 2.0 wt%.

2. A vehicular hub unit bearing (1; 7) comprising
   an outer diameter side member (4) having a raceway surface (20a, 20b) in an inner peripheral surface thereof;

an inner diameter side member (3) having a raceway surface (21 a, 21 b) in an outer peripheral surface thereof;
plural rolling elements (5; 76) rollably disposed between the raceway surface (20a, 20b) of the outer diameter side member (4) and the raceway surface (21 a, 21 b) of the inner diameter side member (3); and
a cage (16, 77) rollably holding the plural rolling elements (5; 76), wherein
the grease composition of claim 1 is sealed up in a space, which is formed between the inner diameter side member (3) and the outer diameter side member (4) and in which the rolling elements (5; 76) are disposed.

**Patentansprüche**

1. Fettzusammensetzung für ein Nabeneinheitslager (1; 7), die umfasst:

   ein Basisöl, das ein Mineralöl oder/und synthetisches Öl als einen Hauptbestandteil enthält;
   ein Verdickungsmittel; und
   ein flockungshemmendes Mittel, das White-Structure-Flaking (WSF) hemmt,
   **dadurch gekennzeichnet, dass**
   das flockungshemmende Mittel ein Rosthemmer vom Amintyp ist, welcher ein Salz von Ölsäure und Dicyclohexylamin enthält und einen Anteil von 0,5 bis 2,0 Gew.-% hat.

2. Fahrzeugnabeneinheitslager (1; 7), das umfasst:

   ein außendurchmesserseitiges Element (4), das eine Laufbahnfläche (20a, 20b) an seiner Innenumfangsfläche aufweist;
   ein innendurchmesserseitiges Element (3), das eine Laufbahnfläche (20a, 20b) an seiner Außenumfangsfläche aufweist;
   eine Vielzahl von rollend zwischen der Laufbahnfläche (20a, 20b) des außendurchmesserseitigen Elements (4) und der Laufbahnfläche (21a, 21b) des innendurchmesserseitigen Elementes (3) angeordneten Rollelementen (5; 76); und
   einen Käfig (16, 77), der die Vielzahl von Rollelementen (5; 76) rollend hält, wobei die Fettzusammensetzung nach Anspruch 1 in einem Raum zwischen dem außendurchmesserseitigen Element (4) und dem innendurchmesserseitigen Element (3) eingeschlossen ist und in dem die Rollelemente (5; 76) bereitgehalten werden.

**Revendications**

1. Composition de graisse pour des roulements de moyeu (1 ; 7), comprenant :

   une huile de base qui comprend au moins l'une d'une huile minérale et d'une huile synthétique comme ingrédient principal de celle-ci ;
   un épaississant ; et
   un produit anti-écaillage, qui empêche l'écaillage en phase blanche,
   **caractérisée en ce que**
   le produit anti-écaillage est un produit antirouille du type amine comprenant un sel d'acide oléique et du dicyclohexylamine, et a un contenu de 0,5 à 2,0 wt%.

2. Roulement de moyeu (1 ; 7) de véhicule comprenant
   un élément latéral de diamètre extérieur (4) ayant une surface de chemin de roulement (20a, 20b) dans une surface périphérique intérieure de celui-ci ;
   un élément latéral de diamètre intérieur (3) ayant une surface de chemin de roulement (21a, 21b) dans une surface périphérique extérieure de celui-ci ;
   plusieurs éléments roulants (5; 76) disposé de façon à rouler entre la surface de chemin de roulement (20a, 20b) de l'élément latéral de diamètre extérieur (4) et la surface de chemin de roulement (21a, 21b) de l'élément latéral de diamètre intérieur (3) ; et
   une cage (16, 77) maintenant de façon à ce qu'ils puissent rouler les éléments roulants (5; 76), dans lequel la composition de graisse de la revendication 1 est enfermée dans un espace, qui est formé entre l'élément latéral de diamètre intérieur (3) et l'élément latéral de diamètre extérieur (4) et dans lequel les éléments roulants (5; 76) sont disposés.

FIG. 1

FIG. 2

FIG. 3

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2878749 B
- JP 3512183 B
- JP 9169989 A
- JP 9087652 A
- JP 2005105026 A
- JP 2001254089 A
- JP 2008639 B
- JP 3026717 B
- JP 3173747 B
- JP 4244624 B
- US 2445936 A
- US 3801506 A
- US 2828261 A
- US 20020076125 A1
- WO 03099973 A
- EP 1496103 A2
- JP 5247485 A
- GB 1083075 A
- JP 2005015496 A
- JP 2005203325 A
- JP 2005203329 A
- JP 2005214053 A

**Non-patent literature cited in the description**

- **KYOZABURO FURUMURA ; SHINICHI SHIROTA ; KIYOSHI HIRAKAWA.** Regarding rolling fatigue at surface starting point and inner starting point. *NSK Bearing Journal,* 1977, 1-10
- **P. SCHATZBERG ; I. M. FELSEN.** Effects of water and oxygen during rolling contact lubrication. *Wear,* 1968, vol. 12, 331-342